# EUROPÄISCHE PATENTSCHRIFT

(11) **EP 0 824 156 B1**
(45) Veröffentlichungstag und Bekanntmachung des Hinweises auf die Patenterteilung: **27.08.2003**
(21) Anmeldenummer: 97113631.2
(22) Anmeldetag: 07.08.1997
(51) Int. Cl.: D06P 5/08, D06P 5/06, D06P 1/56, C08G 71/02, C08G 73/02

(54) **Wasserlösliche Harnstoffderivat-Polymere mit quaternären Ammonium-Gruppen und deren Verwendung**
Watersoluble ureaderivatives polymers with quaternary ammonium groups and their use
Polymères dérivés de l'urée, solubles dans l'eau, ayant des groupements ammonium quaternaire, et leur utilisation

(30) Priorität: 15.08.1996 EP 96810543
(43) Veröffentlichungstag der Anmeldung: 18.02.1998
(73) Patentinhaber: Clariant Finance (BVI) Limited, Road Town, Tortola (VG)
(72) Erfinder: Danner, Bernard, 68400 Riedisheim (FR); Palacin, Francis, 68400 Riedisheim (FR)
(74) Vertreter: D'haemer, Jan Constant

(56) Entgegenhaltungen:
- EP-A- 0 151 370
- EP-A- 0 259 251
- EP-A- 0 665 255
- DE-A- 1 595 336
- DE-A- 3 216 745
- DE-A- 3 217 835

## Beschreibung

Beim Färben von hydrophilen faserigen Substraten mit substantiven (besonders nicht-ionischen oder anionischen) Farbstoffen können, je nach Farbstoff, Substrat und Färbebedingungen, die Naßechtheiten der erhaltenen Färbungen unterschiedlich und/oder ungenügend sein, so daß die Verwendung von echtheitsverbessernden Zusätzen gewünscht ist und in den Färbereien auch gerne praktiziert wird. Bei echtheitsverbessernden Zusätzen - im allgemeinen Fixierhilfsmittel - können mehrere Probleme auftreten, z.B. daß ein bestimmtes Fixierhilfsmittel auf eine bestimmte eng ausgewählte Farbstoffgamme abgestellt ist und folglich auf unterschiedliche Farbstoffe eine unterschiedliche Fixierwirkung bzw. Naßechtheitsverbesserungswirkung aufweist (z.B. besonders bei Färbungen mit Direktfarbstoffen die keine Metallkomplexe sind) (wie z.B. solche die in der DE-A-3216745 oder 3217835 oder in der EP-A-0151370 oder 0665255 beschrieben sind), oder daß die Fixiermittel unter deutlich alkalischen Bedingungen appliziert werden müssen (wie z.B. solche die in der EP-A-0259251 beschrieben sind), wonach mehrfach gespült wird (u.a. mit heißem Wasser) und/oder eine Neutralisation (der Ware und/oder des Abwassers) einzuschalten ist.

Es wurde nun gefunden, daß unter Verwendung der unten definierten Polymeren (F), welche nach Imprägnierverfahren unter neutralen bis sauren Bedingungen applizierbar sind, eine hervorragende Verbesserung der Echtheiten von Färbungen erzielbar ist, die mit substantiven (vornehmlich nicht-ionischen oder insbesondere anionischen) Farbstoffen erhältlich sind, im wesentlichen mit Direktfarbstoffen, Reaktivfarbstoffen, Schwefelfarbstoffen und Küpenfarbstoffen, auf hydrophilen Substraten die in ihrer Struktur Hydroxygruppen (vornehmlich Cellulosefasern), Aminogruppen oder Thiolgruppen (vornehmlich natürliche Polyamide, im wesentlichen Polypeptide und Kollagen) enthalten.

Die Erfindung betrifft die wasserlöslichen Polymeren (F) wie unten definiert und Präparate davon, deren Herstellung und deren Verwendung.

Ein erster Gegenstand der Erfindung sind also polymere, wasserlösliche, quaternäre Ammoniumverbindungen (F) erhältlich durch Quaternierung von
(a) mindestens einer aminogruppenhaltigen Harnstoffverbindung, die eine oder mehrere Gruppen der Formel

   -NH-CO-NH-G-L- (α)

   enthält, worin
   - G: eine Verbrückungsgruppe
   und
   - L: eine tertiäre, quaternierbare Aminogruppe
   bedeuten,
   mit
(b)
   (b₁) einem Epihalohydrin
      und gegebenenfalls
   (b₂) mindestens einem weiteren Quaternierungsmittel
   zu einem quaternierten Produkt (q)
   und Umsetzung des quaternierten Produktes (q) mit
(c) einem Dialdehyd der Formel 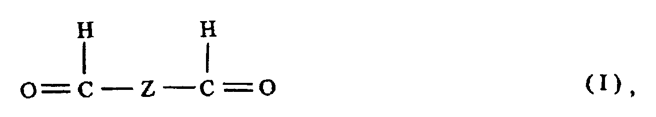
worin Z Methylen oder die direkte Bindung bedeutet,
oder einem Harnstoffderivat davon.

Die aminogruppenhaltigen Harnstoffverbindungen (a) enthalten mindestens eine tertiäre, quaternierbare Aminogruppe. Sie sind insbesondere durch Kondensation von Harnstoff mit
(a₁) mindestens einem Polyamin, das mindestens eine primäre Aminogruppe und mindestens eine sekundäre oder tertiäre Aminogruppe enthält, und/oder mindestens einem Aminoamid, das mindestens eine unsubstituierte Carbamoylgruppe und mindestens eine sekundäre oder tertiäre Aminogruppe enthält,
   und gegebenenfalls Umsetzung mit
(a₂) mindestens einem weiteren aliphatischen Reagens, das zur alkylierenden oder acylierenden Reaktion mit Harnstoff und/oder mit dem Umsetzunsprodukt von Harnstoff mit (a₁) unter Bildung einer acylierten oder tertiären Aminogruppe fähig ist,
erhältlich.

Die Umsetzung von Harnstoff mit (a₁) wird vorteilhaft so durchgeführt, daß unter Ammoniakabspaltung einfache oder, wenn (a₁) mehrere reaktionsfähige -NH₂ Gruppen enthält, auch oligomere Kondensate entstehen. Das Reagens (a2) dient im wesentlichen zur Umsetzung allfälliger noch vorhandener primärer oder auch sekundärer Aminogruppen im Umsetzungsprodukt und/oder gegebenenfalls zur Umsetzung mindestens eines Teils übriger nicht-reagierter -NH₂ Gruppen des Harnstoffes.

Als (a₁) wird vorteilhaft mindestens eine Verbindung der Formel 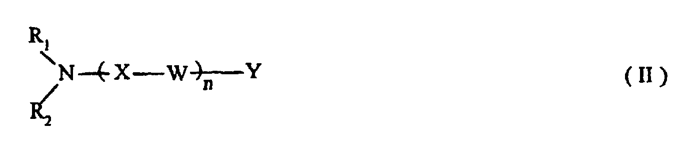 eingesetzt, worin
- R₁: Wasserstoff, C₁₋₂-Alkyl oder eine Gruppe der Formel -X₁-CO-NH₂,
- R₂: Wasserstoff, C₁₋₂-Alkyl oder eine Gruppe der Formel -X- NH₂ oder -X₁-CO-NH₂,
oder R₁ und R₂ zusammen mit dem Stickstoffatom an welches sie gebunden sind, einen Ring der Formel 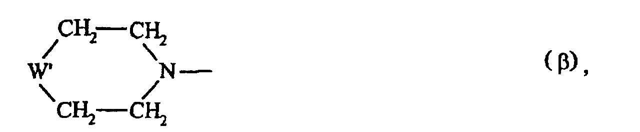
- X: C₂₋₆-Alkylen,
- X₁: C₁₋₆-Alkylen,
- W: -NR₃-, -O- oder -CO-NH-,
- W': -O- oder -NR₃- ,
- Y: eine Gruppe der Formel -X- NH₂ oder -X₁ -CO-NH₂,
- R₃: Wasserstoff, C₁₋₂-Alkyl oder eine Gruppe der Formel -X-NH₂ oder -X₁-CO-NH₂
und
- n: eine Zahl von 0 bis 4
bedeuten, wobei, wenn R₁ und R₂ beide Wasserstoffbedeuten, in mindestens einer Verbindung der Formel (II) n für eine Zahl von 1 bis 4 steht.

Unter den C₁₋₂-Alkylresten, d.h. unter Äthyl und Methyl, ist Methyl bevorzugt.

Die Alkylengruppen in der Bedeutung von X sind vorzugsweise linear und unverzweigt; es können insbesondere die folgenden genannt werden: Äthylen, Propylen-1,3, Butylen-1,4 und Hexamethylen, worunter besonders Äthylen und Propylen bevorzugt sind.

Die Alkylenreste in der Bedeutung von X₁ sind vorzugsweise offenkettig und können, wenn sie 3 bis 6 Kohlenstoffatome enthalten, auch verzweigt sein; es können beispielsweise genannt werden Methylen, Äthylen, Propylen-1,2 und -1,3, Butylen-1,3 und -1,4 und Pentamethylen; unter den Bedeutungen von X₁ ist insbesondere Äthylen bevorzugt.

R₃ steht vorteilhaft für R₃', d.h. für Wasserstoff, C₁₋₂-Alkyl oder -X₁-CO-NH₂.

W bedeutet vorteilhaft -NR₃- oder -CO-NH-, vorzugsweise W₁, d.h. -NR₃'- oder -CO-NH-.

Wenn n 2 bis 4 bedeutet, können die entsprechenden n Gruppen der Formel -X-W- untereinander die gleiche Bedeutung oder unterschiedliche Bedeutungen haben. Wenn das Molekül zwei oder mehr Gruppen Y enthält, können diese untereinander die gleiche Bedeutung oder verschiedene Bedeutungen haben. Vorzugsweise ist mindestens ein Y eine Gruppe -X-NH₂.

Die Verbindungen der Formel (II) sind bekannt oder können analog zu bekannten Methoden hergestellt werden. Wenn W für -CO-NH- steht und/oder wenn R₂ für eine Gruppe der Formel -X₁-CO-NH₂ steht, können die jeweiligen Amide z.B. durch Umsetzung eines entsprechenden Ausgangsamins mit beispielsweise Acrylamid, Methacrylamid oder einem C₄₋₆-Lactam hergestellt werden; wenn X₁ für Methylen steht, kann das jeweilige Ausgangsamin beispielsweise mit Chloracetamid alkyliert werden. Analoges gilt für die Einführung von Gruppen der Formel -X₁-CO-NH₂ als R₃ an ein entsprechendes Amingrundgerüst.

Unter den Verbindungen (a₁) der Formel (II) sind insbesondere die folgenden hervorzuheben:
(a₁₁) Verbindungen der Formel 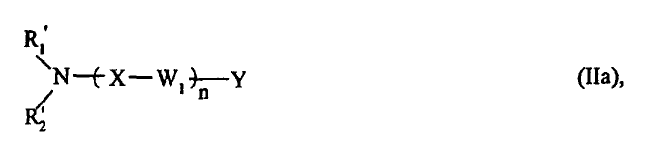 worin
   - R₁': C₁₋₂-Alkyl,
   - R₂': C₁₋₂-Alkyl,
   - W₁: eine Gruppe der Formel -NR₃'- oder -CO-NH-
   und
   - R₃': Wasserstoff, C₁₋₂-Alkyl oder -X₁-CO-NH₂
   bedeuten,
   worunter diejenigen bevorzugt sind, in welchen R₃' Wasserstoff oder n Null bedeutet, insbesondere diejenigen der Formel 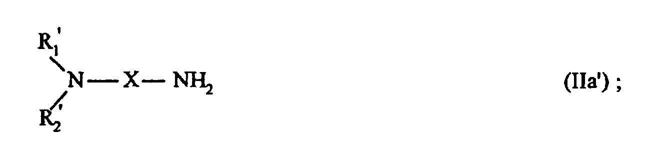
(a₁₂) Verbindungen der Formel 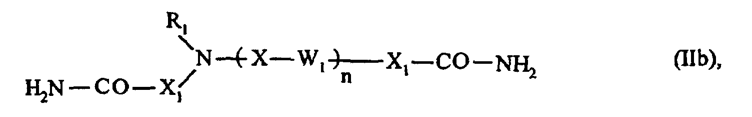 diese können beispielsweise durch Alkylierung entsprechender Ausgangsamine mit -X₁-CO-NH₂ abgebenden Reagenzien, beispeilsweise wie oben angegeben, hergestellt werden; in der Formel (IIb) bedeutet R₁ vorzugsweise C₁₋₂-Alkyl oder -X₁-CO-NH₂; in der Formel (IIb) bedeutet n vorzugswseise 0 oder 1;
(a₁₃) Verbindungen der Formel 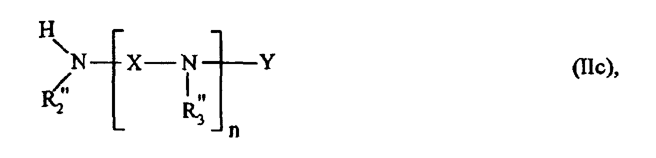 worin
   - R₂": Wasserstoff oder einen Rest der Formel -X-NH₂
   und
   - R₃": Wasserstoff oder C₁₋₂-Alkyl
bedeuten,
worunter die einfachen Polyamine, d.h. die Verbindungen der Formel 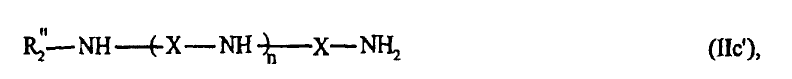 bevorzugt sind.

In den Formeln (IIc) und (IIc') steht der Index n vorteilhaft für 0, 1 oder 2, vorzugsweise für 0 oder 1, besonders bevorzugt für 0. Als Polyamine der Formel (IIc') können beispielsweise genannt werden Äthylendiamin, 1,3-Propylendiamin, Diäthylentriamin, Dipropylentriamin, Äthylen-propylentriamin, Triäthylentetramin und Tetraäthylenpentamin, welche auch als Ausgangsamine für die Herstellung entsprechender Substitutionsprodukte, wie oben angegeben, dienen können. Als Verbindungen der Formel (IIa) können auch entsprechende heterocyclische Verbindungen eingesetzt werden, beispielsweise wie sie durch Umsetzung von Piperazin, N-Methylpiperazin oder Morpholin mit einer einen Rest Y abgebenden Verbindung erhältlich sind und der folgenden Formel entsprechen 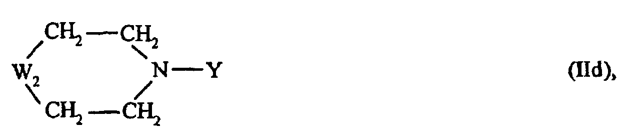 worin
- W₂: -O- oder -NR₃"'-
und
- R₃"': Methyl oder Y
bedeuten.

Wenn in der Formel (IId) W₂ für -NR₃'''- steht und R₃''' Y bedeutet, haben die beiden Symbole Y vorzugsweise untereinander die gleiche Bedeutung; die Verbindungen worin Y für einen Rest der Formel -X₁-CO-NH₂ bedeutet können, analog wie oben angegeben, durch Alkylierung mit entsprechenden ungesättigten Säureamiden, Chloralkanoylamiden oder Lactamen hergestellt werden; diejenigen worin Y -X-NH₂ bedeutet, insbesondere worin X zwei oder drei Kohlenstoffatome enthält, können beispielsweise durch Umsetzung des entsprechenden Ausgangsmorpholins oder Piperazins mit dem Nitril einer ungesättigten Säure, beispielsweise (Meth)acrylnitril, und Reduktion der Nitrilgruppe zum entsprechenden Amin oder durch Umsetzung der sekundären Aminogruppe mit einem Aziridin, z.B. Äthylenimin oder Propylenimin, oder einem entsprechenden Chloralkylamin hergestellt werden.

Zur Herstellung der Verbindungen (a) werden vorteilhaft die Verbindungen (a₁) so eingesetzt, daß die primären Aminogruppen und/oder die Carbamoylgruppen -CO-NH₂ unter Ammoniakabspaltung mit dem Harnstoff kondensiert werden und sonstige im Molekül vorhandene Aminogruppen entweder tertiär sind oder, wenn sie primär oder sekundär sind, vor der Weiterumsetzung mindestens teilweise zu tertiären Aminogruppen alkyliert werden und gegebenenfalls übrige Aminogruppen gewünschtenfalls acyliert werden können. Die Reagenzien (a₂) dienen zu diesem Zweck. Vorzugsweise wird als (a₂) mindestens eine Verbindung eingesetzt, welche eine Verbindung der Formel 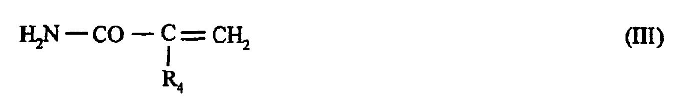 oder

R₅―Hal (IV),

worin
- R₄: Wasserstoff oder Methyl,
- R₅: C₁₋₄-Alkyl, Benzyl, C₂₋₄-(β-Hydroxyalkyl) oder -CH₂-CO-NH₂
und
- Hal: Chlor oder Brom
bedeuten,
oder ein Epihalohydrin, Di-(C₁₋₂-alkyl)-sulfat oder C₂₋₄-Oxiran
ist

Als Verbindung der Formel (III) wird vorzugsweise Acrylamid verwendet. In der Formel (IV) steht Hal vorzugsweise für Chlor; R₅ steht vorzugsweise für Methyl, Äthyl oder Benzyl, oder die Verbindungen der Formel (IV) stellen vorzugsweise ein Chlorhydrin dar, z.B. Äthylenchlorhydrin. Unter den Dialkylsulfaten ist Dimethylsulfat bevorzugt. Unter den Oxiranen sind Propylenoxyd und Äthylenoxyd bevorzugt.

Die Umsetzung von Harnstoff mit (a₁) wird zweckmäßig so geführt, daß pro Mol Harnstoff mindestens ein Äquivalent (a₁) eingesetzt wird, wobei als ein Äquivalent (a₁) ein Mol (a₁) geteilt durch die Anzahl gesamter reaktionsfähiger primärer Aminogruppen und -CO-NH₂ Gruppen verstanden wird; vorzugsweise sind die reaktionsfähigen Gruppen ausschließlich primäre Aminogruppen.

Als Verbindungen (a₁) können solche eingesetzt werden, die tertiäre Aminogruppen bereits enthalten, wie insbesondere die Verbindungen der Formel (IIa), (IIa') und (IId) oder diejenigen der Formel (IIb) worin R₁ C₁₋₂-Alkyl bedeutet und/oder, wenn n 1 bis 4 bedeutet und W₁ -NR₃'- bedeutet, mindetens ein R₃' nicht für Wasserstoff steht, oder der Formel (IIc) worin, wenn n 1 bis 4 bedeutet, mindestens ein R₃" für C₁₋₂-Alkyl steht. Es können aber auch statt dessen oder zusätzlich dazu solche Verbindungen (a₁) eingesetzt werden, die keine tertiären Aminogruppen enthalten, und nach der Umsetzung mit dem Harnstoff können mit entsprechenden Alkylierungsmitteln, insbesondere solchen wie unter (a2) definiert, im Umsetzungsprodukt vorhandene sekundäre oder auch primäre Aminogruppen in tertiäre umgewandelt werden.

Wenn (a₁) eine einheitliche Verbindung ist, ist diese vorteilhaft eine Verbindung die eine tertiäre Aminogruppe enthält; vornehmlich sind dies Aminoverbindungen (a₁'), d.h. solche wie unter (a₁₁) definiert oder solche der Formel (IIb) worin R₁ C₁₋₂-Alkyl bedeutet und/oder, wenn n 1 bis 4 bedeutet und mindestens ein W₁ -NR₃'- bedeutet, mindestens ein R₃' eine andere Bedeutung als Wasserstoff aufweist, oder der Formel (IIc) worin n 1 bis 4 bedeutet und mindestens ein R₃" C₁₋₂-Alkyl bedeutet, oder der Formel (IId).

Die übrigen eingesetzten Aminoverbindungen (a₁), welche keine tertiären Aminogruppen enthalten, sind vornehmlich (a₁"), d.h. entsprechen denjenigen Verbindungen (a₁₂) und (a₁₃) die keine tertiären Aminogruppen enthalten; dies sind insbesondere Verbindungen der Formel (IIb), worin R₁ Wasserstoff bedeutet und, wenn n 1 bis 4 bedeutet und W₁ -NR₃'- bedeutet, R₃' auch Wasserstoff bedeutet, Verbindungen der Formel (IIc) worin n 1 bis 4 bedeutet und R₃" Wassertoff bedeutet, und Verbindungen der Formel (IIc').

Pro Mol Harnstoff werden beispielsweise mindestens 1 Äquivalent und höchstens 2 Mol (a₁) eingesetzt Das Molverhältnis (a₁)/Harnstoff liegt vorteilhaft im Bereich von 0,75/1 bis 2/1, vorzugsweise 0,8/1 bis 1,9/1, insbesondere 1/1 bis 1,8/1, worunter Molverhältnisse (a₁)/Harnstoff ≥ 1,1/1 bevorzugt sind. Das Molverhältnis tertiärer Aminoverbindungen (a₁), insbesondere (a₁'), zu den gesamten Verbindungen (a₁), insbesondere zu (a₁') + (a₁"), liegt beispielsweise im Bereich von 30 bis 100 Mol-%, vorteilhaft 40 bis 100 Mol-%, vorzugsweise 50 bis 100 Mol-%. Vorteilhaft sind die tertiären Aminoverbindungen solche wie unter (a₁₁) definiert, insbesondere der Formel (IIa'), und/oder solche wie unter (a₁₃) definiert, oder der Formel (IId). Werden als (a₁) polyfunktionelle Verbindungen eingesetzt, d.h. solche mit mehr als einer reaktionsfähigen -NH₂ Gruppe, so sind diese vorzugsweise difunktionell, insbesondere linear, z.B. solche wie unter (a₁₂) definiert, worin R₃' Wasserstoff oder C₁₋₂-Alkyl bedeutet, oder wie unter (a₁₃) definiert oder noch der Formel (IId), worin W₂ -NY- bedeutet, wobei Y vorzugsweise jeweils -X-NH₂ bedeutet.

Werden als (a₁) Aminoverbindungen eingesetzt, die keine tertiären Aminogruppen enthalten, so werden im Umsetzungsprodukt aus Harnstoff und (a₁) die vorhandenen sekundären und gegebenenfalls primären Aminogruppen mindestens teilweise zu tertiären Aminogruppen umgesetzt (alkyliert), vorzugsweise mit mindestens einem Alkylierungsmittel wie unter (a₂) aufgezählt. Wenn im Umsetzungsprodukt aus Harnstoff und (a₁) nicht umgesetzte N-CO-NH₂-Gruppen vorhanden sind, können diese mindestens teilweise z.B. mit einem Amid (a₂) unter Ammoniakabspaltung acyliert werden oder untereinander unter Ammoniakabspaltung einen Biuretrest bilden.

Die Umsetzung von Harnstoff mit den Reagenzien (a₁) kann auf an sich bekannte Weise durchgeführt werden, beispielsweise bei Temperaturen oberhalb 100°C, vorteilhaft im Bereich von 105 bis 200°C, vorzugsweise 110 bis 180°C, z.B. in Abwesenheit von Lösungsmitteln oder auch in Gegenwart von Wasser und/oder einem sonstigen inerten Lösungsmittel, wobei die Art und Menge des Lösungsmittels, die Apparatur und die Temperatur zweckmäßig so gewählt werden, daß die gewünschte Reaktionstemperatur zur Abspaltung von Ammoniak erreicht werden kann. Vorteilhaft wird in Abwesenheit von Lösungsmitteln begonnen und, sobald die Reaktion soweit fortgeschritten ist, daß die Reaktionsmasse dickflüssig wird oder beim Abkühlen sich verfestigen kann, wird eine solche Menge Wasser zugegeben, die ausreicht damit die Masse rührbar sei, z.B. 10 bis 200 Gew.-% der Reaktionsmasse. Die Abspaltung von Ammoniak in der Umsetzung von Harnstoff mit einer primären Carbamoylgruppe erfolgt vorteilhaft in Abwesenheit von Wasser. Eine allfällige Acylierung mit einem Amid (a₁) oder (a₂) kann auch bei den genannten Temperaturen durchgeführt werden. Eine Alkylierung mit (a₂) erfolgt vorteilhaft in Gegenwart eines Lösungsmittels, z.B. von Wasser, und bei Temperaturen im Bereich von z.B. -15°C bis Siedetemperatur des Lösungsmittels, vorteilhaft 0°C bis 100°C, vorzugsweise 30°C bis 100°C, je nach Alkylierungsmittel. Die Anlagerung einer Doppelbindung oder einer Aziridin- oder Epoxyverbindung kann durch einfaches Zusammenmischen oder Zudosieren der Reagenzien, vorteilhaft in den genannten Temperaturbereichen, erfolgen. Die Umsetzung mit Halogeniden (Bromiden oder vorzugsweise Chloriden) erfolgt zweckmäßig unter dehydrohalogenierenden Bedingungen, z.B. in Gegenwart einer zugesetzten Base oder auch ohne eine Base zuzusetzen, da die Basizität des eingesetzten Amins im allgemeinen für die Umsetzung bereits ausreichen kann. Erforderlichenfalls bzw. gewünschtenfalls kann eine Base zugegeben werden, z.B. ein Alkalimetallhydroxyd (LiOH, NaOH oder KOH, vorzugsweise Natriumhydroxyd); im allgemeinen, besonders wenn von den bevorzugten Aminen (a₁) ausgegangen wurde, ist die Verwendung einer zusätzlichen Base nicht nötig.

Vorzugsweise wird kein separates (a₂) verwendet, sondern die tertiären Amine werden vorteilhaft bereits als (a₁), gegebenenfalls in Kombination mit nicht-tertiären Aminen, wie oben erwähnt, eingesetzt.

Die Umsetzung mit (b) zur Quaternierung von tertiären Aminogruppen in (a) erfolgt beispielsweise unter den gleichen Reaktionsbedingungen, wie oben für die Herstellung tertiärer Aminogruppen beschrieben, beispielsweise im Temperaturbereich von 30°C bis Siedetemperatur des Reaktionsgemisches, vorteilaft bei 50 bis 100°C, vorzugsweise bei 60 bis 100°C. Die Menge Wasser als Lösungsmittel wird vorteilhaft so gewählt, daß das Reaktionsprodukt (q) in Form von Lösung entsteht, beispielsweise in Form von 10 bis 70 %-iger Lösung des quaternierten Produktes (q). Die Quaternierung wird vorteilhaft mit solch einer Menge Quaternierungsmittel und solange durchgeführt, bis mindestens 50 % der Anzahl quaternierbarer Aminogruppen in (a) quaterniert ist, vorzugsweise so, daß 50 bis 100 Mol-% der quaternierbaren Aminogruppen im Umsetzungsprodukt (a) mit (b) quaterniert werden. Besonders vorteilhaft werden 80 bis 100 Mol-% der quaternierbaren Aminogruppen in (a) mit (b) quaterniert.

Als (b) wird (b₁) verwendet, welches vorteilhaft Epichlorhydrin oder Epibromhydrin ist, besonders bevorzugt Epichlorhydrin, wobei gewünschtenfalls zusätzlich (b₂) verwendet werden kann, welches vorteilhaft ein C₁₋₄-Alkylchlorid oder ein Di-(C₁₋₂-alkyl)-sulfat ist. Als C₁₋₄-Alkyl in (b₂) kommt vorzugsweise Äthyl oder Methyl in Betracht und als Di-(C₁₋₂-alkyl)-sulfat kommt vorzugsweise Dimethylsulfat in Betracht (b₂) kann beispielsweise bis zu 80 Mol-% von (b₁) + (b₂) ausmachen, vorteilhaft 0 bis 50 Mol-% davon, insbesondere 0 bis 25 Mol-% davon. Vorzugsweise wird mit (b₁) alleine quaterniert.

Wenn ein Epihalohydrin sowohl als (a₂) als auch als (b₁) bzw. als (b) eingesetzt wird, kann die Zugabe auf einmal erfolgen und die Umsetzung zur Herstellung der tertiären Aminogruppe und die Quaternierung können in einem Arbeitsgang erfolgen. Besonders vorteilhaft wird erschöpfend quaterniert. Zu Beginn der Umsetzung mit (b) liegt der pH-Wert des wäßrigen Reaktionsgemisches vorteilhaft im sauren bis deutlich basischen Bereich, insbesondere je nach (a) und (b) bzw. je nach Art und Menge der eingesetzten Verbindungen (a₁) bzw. (b₁) und gegebenenfalls verwendeten Verbindungen (a₂) bzw. (b₂), und liegt vornehmlich im Bereich von 2 bis 13, z.B. 5 bis 12,5, vorteilhaft 8 bis 12. Der pH vom Umsetzungsprodukt von (a) mit (b) in wäßriger Lösung, bei einer Konzentration von beispielsweise 20 bis 50 %, liegt vorteilhaft im Bereich von 4 bis 10, vorzugsweise 5 bis 9. Der pH einer 20 bis 50 %-igen Lösung von (q) liegt z.B. im gleichen Bereich.

Als (c) wird vorzugsweise Glyoxal verwendet.

Die Umsetzung des quaternären Umsetzungsproduktes (q) mit (c) kann in wäßriger Lösung durchgeführt werden, günstigerweise im Reaktionsgemisch, in welchem das quaternierte Produkt (q) hergestellt worden ist, beispielsweise unter neutralen bis sauren Bedingungen, vorteilhaft im pH-Bereich von 3 bis 7, vorzugsweise 3 bis 6. Der pH kann erforderlichenfalls mit an sich üblichen Basen oder Säuren eingestellt werden, beispielsweise mit Salzsäure, Schwefelsäure oder einem Alkalimetallhydroxyd, vornehmlich Natriumhydroxyd. Die Umsetzung erfolgt z.B. im Temperaturbereich von Raumtemperatur bis zur Siedetemperatur des Reaktionsgemisches, vorteilhaft im Bereich von 30 bis 100°C.

Pro Mol Harnstoff, der zur Herstellung von (a) bzw. (q) eingesetzt wurde, werden vorteilaft 0,5 bis 3, vorzugsweise 0,8 bis 2,5 Mol (c) eingesetzt. Insbesondere wird das Molverhältnis vom Dialdehyd (c) zu den Harnstoffeinheiten, die aus der Umsetzung vom Harnstoff abstammen so gewählt, daß die Harnstoffeinheiten in (q) erschöpfend mit dem Dialdehyd (c) umgesetzt werden, so daß auch eine Erhöhung des Molekulargewichtes stattfinden kann. Anstelle von einem Dialdehyd der Formel (I) kann auch ein entsprechendes Harnstoffderivat davon als (c) eingesetzt werden. Als Harnstoffderivat eines Dialdehyds der Formel (I) wird insbesondere ein Umsetzungsprodukt verstanden, das noch zur Reaktion mit weiterem Harnstoff bzw. mit weiteren Harnstoffeinheiten fähig ist und beispielsweise aus der Umsetzung von 0,25 bis 1,1, vorteilhaft 0,4 bis 1 Mol Harnstoff mit 1 Mol Dialdehyd der Formel (I), vorzugsweise Glyoxal, erhältlich ist. Als (c) kann beispielsweise ausschließlich Dialdehyd der Formel (I) oder ein Umsetzungsprodukt davon mit Harnstoff, wie beschrieben, oder auch ein Gemisch aus Dialdehyd mit einem solchen Umsetzungsprodukt eingesetzt werden. Wenn anstelle eines Teils oder des gesamten Dialdehyds der Formel (I) ein Harnstoffderivat davon eingesetzt wird, wird zweckmäßig das Mengenverhältnis davon zum quaternierten Umsetzungsprodukt (q) entsprechend erhöht. Wenn beispielsweise anstelle des Dialdehyds ein Harnstoffderivat des Dialdehyds aus 1 Mol Dialdehyd und 0,5 Mol Harnstoff verwendet wird, wird von diesem Harnstoffderivat zweckmäßig doppelt so viel eingesetzt, wie es der Menge an nicht umgesetztem Dialdehyd (c) entsprechen würde.

Die Umsetzung von (q) mit (c) wird vorzugsweise so lange durchgeführt, bis eine merkliche Viskositätserhöhung des Reaktionsgemisches eingetreten ist, aber das Reaktionsgemisch noch gut rührbar ist.

Die hergestellten wäßrigen Produkte enthalten das quatemäre wasserlösliche Polymere (F) als wäßrige Lösung.

Durch die Anwesenheit der umgesetzten Komponente (c) erfolgt auch eine Erhöhung des Molekulargewichtes, die zu einer Erhöhung der Viskosität der wäßrigen Lösung führt. Unmittelbar nach Herstellung des Produktes liegt z.B. die Brookfield-Rotationsviskosität, an einer wäßrigen 25 %-igen Lösung von (F) bei 20°C gemessen, unterhalb 1000 mPa·s oder, an einer wäßrigen 50 %-igen Lösung bei 20°C gemessen, unterhalb 10000 mPa·s.

Die Produkte (F) werden vorteilhaft in Form von wäßrigen Lösungen hergestellt und gehandhabt (insbesondere gelagert, transportiert und verwendet). Ein besonderer Gegenstand der Erfindung sind die wäßrigen konzentrierten Lösungen von (F), insbesondere solche mit einer Konzentration an (F) im Bereich von 10 bis 80 Gew.-%, vorzugsweise 20 bis 60 Gew.-%.

Der pH der wäßrigen konzentrierten Präparate der Produkte (F) liegt beispielsweise im Bereich von 2 bis 8,5, vorteilhaft im Bereich von 3 bis 8, vorzugsweise 3,5 bis 7.

Beim Lagern kann die Viskosität des konzentrierten Produktes variieren, insbesondere so, daß für eine bestimmte Zeit die Viskosität leicht zunimmt. Diese Änderung der Viskosität des Produktes beeinträchtigt allerdings nicht seine applikatorische Wirkung.

Es wird angenommen, daß durch die Umsetzung der quaternären Harnstoffderivate (q) mit (c) cyclische Harnstoffe entstehen, die Einheiten der folgenden Formeln 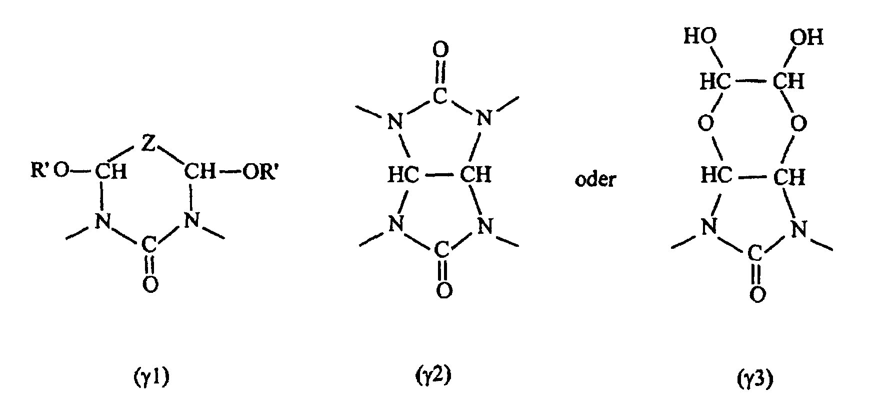 im Polymeren enthalten, und aus der Quaternierung von (q) mit (b) quaternäre Gruppen der folgenden Formeln 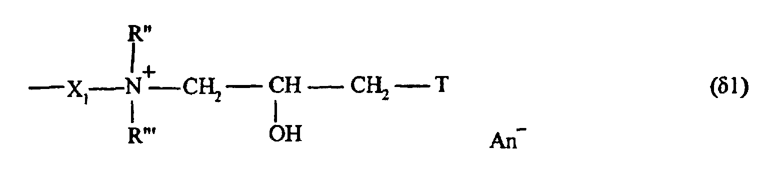 oder 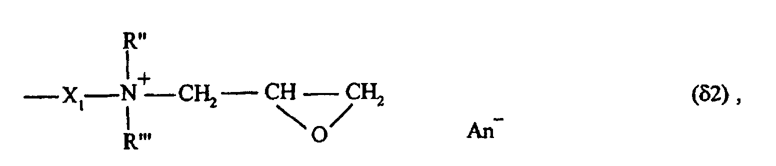 enthalten,
worin
- R': jeweils, unabhängig von einander Wasserstoff oder -CHOH-Z-CH₂OH oder eine Brücke der Formel -CHOH-Z-CHOH- zu einem verfügbaren Stickstoff eines Harnstoffrestes
oder
- R': zusammen mit einem weiteren R' eine Brücke der Formel -CHOH-Z-CHOH-,
- R": C₁₋₄-Alkyl, -X₁-CO-NH₂ , -CH₂-CHOH-CH₂OH, -CH₂-CHOH-CH₂Cl oder 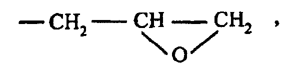
- R"': C₁₋₄-Alkyl, Benzyl oder -X₁-CO-NH₂,
- T: -OH, Cl oder die Bindung zu einer weiteren Ammoniumgruppe
und
- An⁻: ein Gegenion zum Ammoniumkation bedeuten.

Die freien Bindungen in (γ₁), (γ₂) und (γ₃) sind beispielsweise an ein Brückenglied X oder über -CO- an ein Brückenglied X₁ gebunden.

Die Umsetzung mit (b) wird vorteilhaft so durchgeführt, daß keine wesentliche Molekulargewichtserhöhung des Produktes (q) und keine wesentliche oder nur eine leichte Viskositätserhöhung des Produktes (q) erfolgt.

Das Anion An⁻ kann ein beliebiges Anion sein, wie es durch die Quaternierungsreaktion entsteht, beispielsweise Hydroxy, Halogenid oder Alkylsulfat.

Basierend auf den Formeln (γ₁), (γ₃) und (δ₁) und wenn als Ausgangsamine diejenigen der Formeln (IIa') bzw. (IIc') worin n = 0 und R₂" ein Rest -X-NH₂ ist, eingesetzt werden, können die bevorzugten erfindungsgemäßen Polymeren (F) als solche dargestellt werden, die die Einheiten der Formeln 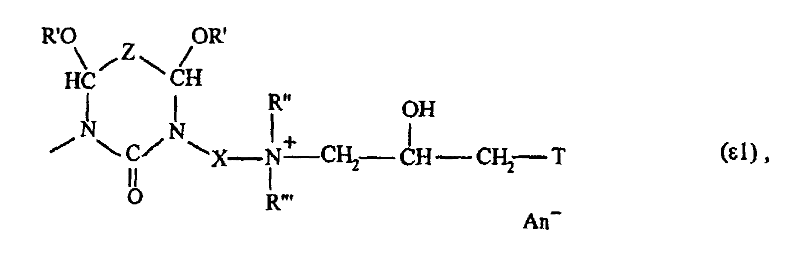 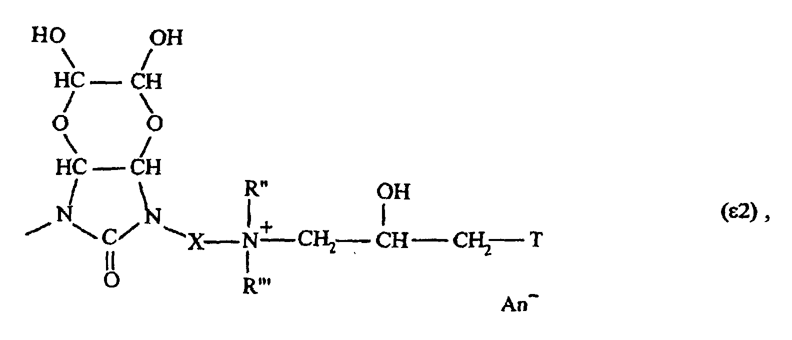 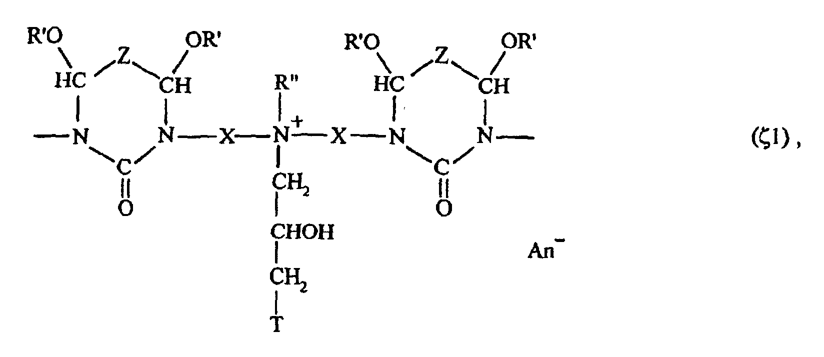 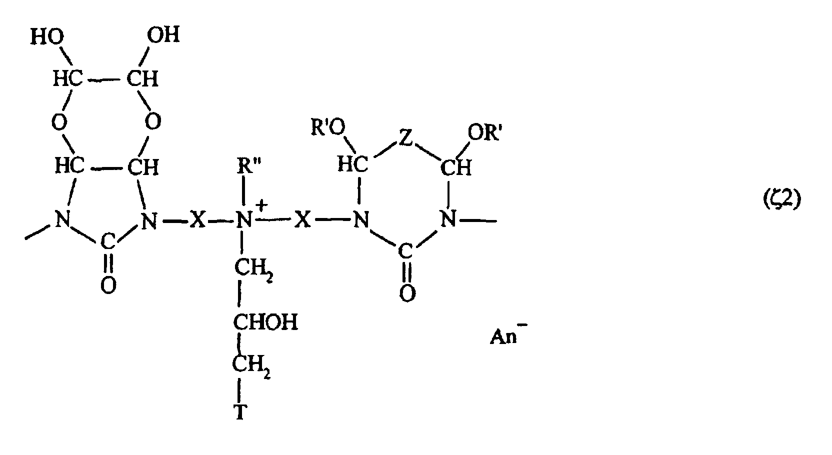 und/oder 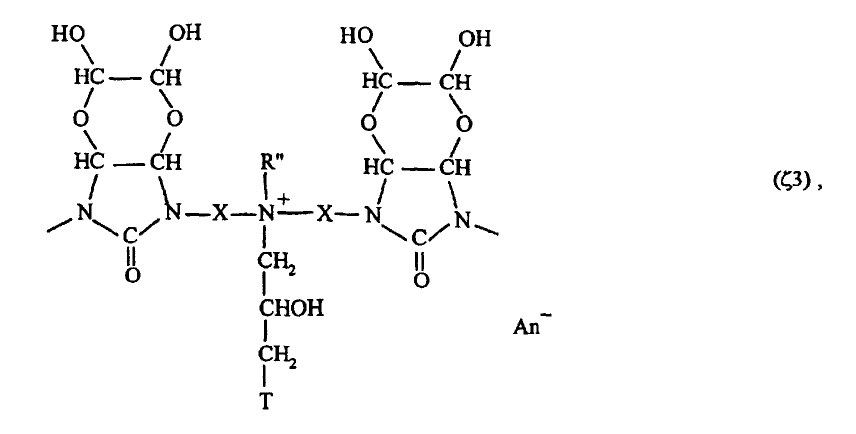 je nach Art und Menge des eingesetzten Aldehyds (d), enthalten, wobei die Hydroxygruppen in -CH₂-CHOH-CH₂-T auch Acetalverbindungen mit den im System vorhandenen Aldehyd- oder Emiacetalgruppen bilden können.

Die polymeren, wasserlöslichen, quaternären Ammoniumverbindungen (F), insbesondere in Form ihrer konzentrierten wäßrigen Lösungen wie oben beschrieben, dienen als Fixierhilfsmittel für Färbungen von hydrophilem Fasermaterial, insbesondere für solche die mit nicht-ionischen oder vorzugsweise anionischen Farbstoffen erzeugt worden sind, und ein weiterer Gegenstand der Erfindung ist die Verwendung von (F) als Fixierhilfsmittel für Färbungen von hydrophilem Fasermaterial, besonders für Färbungen mit nicht-ionischen oder anionischen Farbstoffen.

Der Begriff "Fixierhilfsmittel" bedeutet hier insbesondere, daß die Fixierung des Farbstoffes und/oder der Färbung auf dem Substrat dadurch beeinflußt werden kann, so daß eine Optimierung und/oder Verbesserung der Echtheiten, insbesondere Naßechtheiten der jeweiligen Färbungen resultiert.

Als Substrate für die Färbungen eignen sich beliebige hydrophile faserige Substrate, die an sich mit substantiven, wasserlöslichen, insbesondere nicht-ionischen oder anionischen Farbstoffen färbbar sind, vornehmlich Fasermaterial das in den faserbildenden Molekülen aliphatiche Hydroxygruppen (insbesondere in Cellulosefasern) oder Aminogruppen und/oder Thiolgruppen (insbesondere in natürlichen Polyamidfasern, im wesentlichen Polypeptidfasern) enthält. Es seien insbesondere genannt: gegebenenfalls modifizierte Cellulose (z.B. Baumwolle, Hanf, Leinen, Rayon und Celluloseacetate) und natürliche Polyamide (Wolle, Leder) und auch Gemische solcher Fasern untereinander oder mit synthetischen und/oder halbsynthetischen Fasern, z.B. Cellulose/Polyester, Cellulose/Viskoserayon, Wolle/Polyamid und auch elastanhaltige Fasergemische. Die Substrate können in einer beliebigen Bearbeitungsform vorliegen, z.B. als lose Fasern, Fäden, Garnstränge, Spulen, Gewebe, Gewirke, Teppiche, Vliesstoffe oder auch Halbfertig- und Fertigware; ferner können auch Papier und Leder genannt werden. Besonders bevorzugt unter den genannten Substraten ist Textilmaterial, vor allem Cellulosematerial.

Als Farbstoffe, mit denen die jeweiligen Substrate gefärbt werden können, eignen sich beliebige, vornehmlich nicht-ionische oder vorzugsweise anionische, insbesondere wasserlösliche Farbstoffe, wie sie für das jeweilige Substrat geeignet sind. Es kommen insbesondere in Betracht Direktfarbstoffe, Reaktivfarbstoffe, Schwefelfarbstoffe (insbesondere als Leukoschwefelfarbstoffe oder Bunte-Salze) und Küpenfarbstoffe. Darunter sind die Direktfarbstoffe, die Schwefelfarbstoffe und die Reaktivfarbstoffe besonders hervorzuheben. Besonders geeignet ist das erfindungsgemäße Verfahren für das Färben mit Direktfarbstoffen. Als erfindungsgemäß einsetzbare Farbstoffe der genannten Gruppen kommen insbesondere diejenigen in Betracht, wie sie im "Colour Index" unter den Bezeichnungen "Direct Dyes", "Sulphur Dyes", "Vat Dyes", "Reactive Dyes" und "Mordant Dyes" definiert sind und insbesondere auch aufgelistet sind, oder auch wie sie in VENKATARAMAN "The Chemistry of Synthetic Dyes" definiert sind. Vorzugsweise werden für das erfindungsgemäße Verfahren Färbungen eingesetzt, die auf Cellulosetextilfasern (vornehmlich Baumwolle) oder cellulosehaltigen Fasergemischen mit Reaktivfarbstoffen, Schwefelfarbstoffen oder vorzugsweise Direktfarbstoffen erzeugt worden sind.

Das Fasermaterial kann nach beliebigen üblichen Färbeverfahren mit den jeweiligen Farbstoffen gefärbt worden sein, z.B. nach Ausziehverfahren oder Imprägnierverfahren (z.B. durch Klotzen, Tauchen, Sprühen, Rakeln, Walzenübertragung oder Bedrucken) und mit beliebigen, für die jeweiligen Farbstoffe und/oder Substrate geeigneten Apparaturen und Bedingungen.

Direktfarbstoffe werden im allgemeinen unter leicht sauren bis leicht alkalischen Bedingungen appliziert. Schwefelfarbstoffe und Küpenfarbstoffe (unter Küpenfarbstoffen sind hier vor allem diejenigen gemeint, die durch Schwefelung bzw. Thionierung herstellbar sind) werden zweckmäßig in Leukoform alkalisch in Lösung gebracht und unter alkalischen Bedingungen auf das Substrat appliziert und nach der Applikation wird die Leukoform auf dem Substrat durch Oxydation, z.B. durch Belüftung und/oder mit Hilfe eines zugesetzten Oxydationsmittels, z.B. Wasserstoffperoxyd, in die oxydierte Schwefelfarbstoff- bzw. Küpenfarbstoff-Form übergeführt. Die Reaktivfarbstoffe (bevorzugt darunter sind diejenigen, die halogensubstituierte Heterocyclen - vornehmlich Triazinringe oder Pyrimidinringe - enthalten) werden zweckmäßig unter deutlich alkalischen Bedingungen (z.B. mit Natriumcarbonat oder Natronlauge) und in Gegenwart höherer Mengen an zugesetztem Elektrolyt (z.B. Natriumchlorid oder -sulfat) appliziert. Vor der erfindungsgemäßen Behandlung mit (F) ist es von Vorteil die jeweiligen Färbungen zu spülen und erforderlichenfalls zu waschen oder seifen (z.B. bei Färbungen mit Reaktivfarbstoffen oder Schwefelfarbstoffen) und dann erneut zu spülen. Für die erfindungsgemäße Fixierung mit (F) ist es nicht nötig die gespülte Färbung zu trocknen. Sie kann direkt, ohne zu trocknen, in die nächste Behandlungsstufe zur Fixierung mit (F) weitergeleitet werden.

Die erfindungsgemäße Behandlung mit (F) wird vorteilhaft in wäßrigem Medium durchgeführt, vorzugsweise nach Imprägnierverfahren. Besonders vorteilhaft wird nach Continue-Verfahren vorgegangen. Es ist insbesondere von Vorteil, wenn der Färbevorgang auch nach Continue-Verfahren durchgeführt wird, so daß sowohl Färbung als auch Behandlung mit (F) in einer einzigen Apparatur und in einer einzigen Verfahrensfolge durchgeführt werden können. Es ist zwar auch möglich, eine Ausziehfärbung nach Continue-Verfahren mit (F) zu fixieren oder einen Farbdruck in der Druckapparatur oder nach Continue-Verfahren mit (F) zu behandeln oder auch eine Lederfärbung vor dem Trocknen mit einer (F)-Lösung z.B. in der Färbetrommel zu behandeln oder auch nach dem Ausladen aus der Färbetrommel und vor dem Trocknen mit einer (F)-Lösung zu besprühen.

Die Behandlung mit den quaternären Ammoniumverbindungen (F) erfolgt zweckmäßig aus wäßrigem Medium und vorteilhaft bei nahezu neutralen bis deutlich sauren Bedingungen, vornehmlich unter sauren pH-Bedingungen, vorzugsweise bei pH-Werten im Bereich von 2 bis 6, besonders bevorzugt pH 3 bis 5.

Die Konzentration an (F) in der Behandlungsflotte richtet sich im allgemeinen nach der gewünschten bzw. eingestellten Flottenaufnahme des Substrates, der jeweiligen Farbtiefe sowie auch nach Art des Substrates, der Färbung und der Apparatur, sowie des gewählten Imprägnierverfahrens. Die Konzentration an (F) liegt beispielsweise im Bereich von 0,01 bis 12 Gew.-%, bezogen auf das trockene Substrat, für Färbungen von 1/1 RTT (Richttyptiefe), beispielsweise im Bereich von 0,1 bis 6%, vorzugsweise 0,5 bis 3 %, für schwächere Färbungen entsprechend weniger, z.B. für 1/3 RTT 0,03 bis 2 %, vorzugsweise 0,1 bis 1 %.

Die Verbindungen (F) werden vorteilhaft in Gegenwart eines Vernetzungshilfsmittels oder -beschleunigers, bzw. Katalysators (K) eingesetzt. Als (K) kommen im allgemeinen solche Verbindungen in Betracht, wie sie in Systemen für die Kunstharzausrüstung von Textilien (z.B. Knitterfestausrüstung) sonst eingesetzt werden. Vorteilhaft werden als (K) sauer reagierende Substanzen eingesetzt, im wesentlichen starke organische Carbonsäuren (zweckmäßig solche die unter den gewählten Behandlungsbedingungen weder zersetzt werden noch dampfflüchtig sind, vorzugsweise C₂₋₆-Dicarbonsäuren oder -Hydroxycarbonsäuren, z.B. Oxalsäure, Bernsteinsäure, Milchsäure, Weinsäure, Apfelsäure und Citronensäure), starke Mineralsäuren oder sauer reagierende Salze starker Mineralsäuren (z.B. Salzsäure, Schwefelsäure, Salpetersäure, Phosphorsäure oder Fluorborsäure), insbesondere Ammonium-, Magnesium- oder Zinksalze oder Natriumpartialsalze. Beispielsweise kommen als (K) Ammoniumnitrat, -chlorid oder -sulfat, Zinknitrat -sulfat oder -chlorid, Mono- oder Diammoniumphosphat oder Magnesiumchlorid oder -sulfat oder - je nach gwähltem pH - auch Schwefelsäure oder Phosphorsäure in Betracht. Unter den genannten Salzen (K) sind vor allem Zinknitrat und insbesondere Magnesiumchlorid bevorzugt. Die eingesetzten Mengen an (K) liegen vorteilhaft im Bereich von 2 bis 80 Gew.-%, vorzugsweise 5 bis 60 Gew.-%, bezogen auf das Polymere (F), wobei die angegebene Menge an (K) als reine Säure oder reines Salz ohne Hydratationswasser berechnet ist; meistens werden die Salze allerdings in der hydratisierten Form eingesetzt, so z.B. Magnesiumchlorid oder Zinknitrat als Hexahydrate.

Wenn das Produkt (F) in Form von konzentrierter Lösung mit entsprechendem nahezu neutralen bis sauren pH-Wert eingesetzt wird und (K) eingesetzt wird, besonders in den oben-angegebenen bevorzugten Konzentrationen, kann ein pH-Wert der Imprägnierflotte durch einfaches Zugeben von (F) und (K) dem oben angegebenen bevorzugten Bereich entsprechen; sollte eine pH-Korrektur nötig sein, so kann der pH unter Verwendung bekannter Säuren oder Basen, wie sie allgemein in Färbereien üblicherweise eingesetzt werden, eingestellt werden, z.B., zur Herabsetzung des pH-Wertes, mit einer Mineralsäure (Schwefelsäure, Salzsäure, Phosphorsäure) oder einer niedrigmolekularen aliphatischen Carbonsäure, z.B. einer Mono-, Di- oder Tricarbonsäure mit 1 bis 6 Kohlenstoffatomen und gegebenenfalls 1 oder 2 Hydroxygruppen, z.B. Ameisensäure, Essigsäure, Milchsäure, Weinsäure, Bernsteinsäure, Citronensäure, Apfelsäure oder Oxalsäure, oder, zur Erhöhung des pH-Wertes, mit einem Alkalimetallhydroxyd oder -carbonat, z.B. Natriumhydroxyd, Lithiumhydroxyd, Kaliumhydroxyd, Natriumcarbonat oder Kaliumcarbonat. Gewünschtenfalls können auch entsprechende Puffer verwendet werden, die einen pH-Wert im gewünschten Bereich einstellen oder erhalten können. Vorzugsweise wird allerdings so verfahren, daß die Zugabe einer separaten Säure oder Base oder eines Puffers nicht nötig ist.

Die mit der (F)-haltigen und vorzugsweise auch (K)-haltigen Flotte imprägnierten Färbungen können dann zur Fixierung von (F), im feuchten Zustand aufgedockt oder aufgerollt, bei niedriger oder höherer Temperatur eingepackt verweilen gelassen werden, z.B. nach dem Kaltverweilverfahren bei 15 bis 50°C, vorzugsweise 20 bis 40°C, oder durch Verweilen in der Wärme z.B. bei Temperaturen oberhalb 40°C, vorzugsweise 50 bis 90°C. Für das Kaltverweilverfahren kann die Verweildauer beispielsweise 6 Stunden bis 3 Tage dauern, vorzugsweise 8 Stunden bis 2 Tage; für das Verweilen bei erhöhter Temperatur ist die Verweildauer entsprechend kürzer, beispielsweise im Bereich von 30 Minuten bis 24 Stunden, vorzugsweise 1 bis 6 Stunden. Für gefärbte Ledersubstrate ist eine separate Zugabe von (K) nicht unbedingt erforderlich, besonders wenn das Leder mineralisch gegerbt oder nachgegerbt ist oder wenn in einer vorherigen Stufe ein Magnesiumsalz oder -oxyd eingesetzt wurde. Vorzugsweise erfolgt die Fixierung von (F) auf dem Substrat bei Temperaturen oberhalb 90°C, insbesondere oberhalb 100°C, beispielsweise im Bereich von 102 bis 220°C, je nach Substrat und Färbung. Für baumwollhaltige Substrate werden Fixiertemperaturen im Bereich von 120 bis 210, insbesondere 140 bis 200°C bevorzugt, wobei, wenn das Baumwollsubstrat auch noch Polyester enthält, z.B. in Form von Mischgewebe oder Fasergemisch, die Fixiertemperatur vorteilhaft im Bereich von 160 bis 220°C, insbesondere 160 bis 210°C liegt. Wenn die Substrate Elastanfasern enthalten, liegt die Fixiertemperatur allerdings vorteilhaft unterhalb 120°C, insbesondere im Bereich von 105 bis 120°C. Die Fixierdauer kann je nach Temperatur und je nach Art und Menge des eingesetzten Produktes (F) variieren und liegt vorteilhaft im Bereich von 20 Sekunden bis 40 Minuten, vorzugsweise 30 Sekunden bis 10 Minuten, wobei für Fixiertemperaturen oberhalb 140°C das Substrat, z.B. bei Temperaturen zwischen 90 und 135°C, auch vorgetrocknet werden kann (beispielsweise für 1 bis 20 Minuten).

Die erfindungsgemäß einzusetzenden Fixiermittel (F) sind mit sonstigen Ausrüstungsmitteln und Hilfsmitteln, wie sie zur Behandlung und Nachbehandlung von Färbungen und/oder Ausrüstung von Fasermaterial eingesetzt werden, im allgemeinen verträglich, z.B. mit Gleitmitteln, Weichmachern, Antistatika, schmutzabweisenden Ausrüstungsmitteln und Kunstharzausrüstungsmitteln (z.B. für die knitterfreie Ausrüstung). Sie haben eine hervorragende Wirkung in der Verbesserung der Echtheiten, insbesondere Naßechtheiten der Färbungen (Wasserechtheit, Wassertropfenechtheit, Schweißechtheiten und Waschechtheiten, insbesondere auch bei 60°C) und der Migrationsbeständigkeit. Auch sonstige Echtheiten wie Lichtechtheit, Reibechtheiten, Chlorbadewasserechtheit, Ozonechtheit, Witterungsechtheit und Naßlichtechtheit werden im allgemeinen nicht beeinträchtigt.

In den folgenden Beispielen bedeuten die Teile Gewichtsteile und die Prozente Gewichtsprozente; die Temperaturen sind in Celsiusgraden angegeben. In den Applikationsbeispielen beziehen sich die Prozentangaben auf das trockene Substrat. Die in den Applikationsbeispielen eingesetzten Farbstoffe sind in handelsüblicher Form eingesetzt, die nach den in den Beispielen gezeigten Applikationsmethoden die dort angegebenen Farbtiefen ergeben. "C.I." steht für "Colour Index" und "RTT" für "Richttyptiefe".

### Beispiel 1

30,0 Teile Äthylendiamin und 60,0 Teile Harnstoff werden vorerst auf 100°C und anschließend innerhalb 2 Stunden auf 116°C erhitzt, wobei sich unter Ammoniakabspaltung ein festes Reaktionsprodukt bildet, das vor dem Blockieren des Rührers mit 20,0 Teilen Wasser und 76,6 Teilen Dimethylaminopropylamin versetzt wird. Es entsteht eine rührbare Suspension, die bis auf 110°C erhitzt wird und bei dieser Temperatur während 8 Stunden unter Ammoniakabspaltung ausreagieren gelassen wird. Nun werden noch 101,6 Teile Wasser zugegeben und das Gemisch wird auf 35 bis 40°C gekühlt; bei dieser Temperatur werden 69,4 Teile Epichlorhydrin unter Kühlen innerhalb von 30 Minuten zugefügt. Anschließend wird innerhalb von 5 Stunden auf 70°C aufgeheizt und 4 Stunden bei dieser Temperatur reagieren gelassen. Nun werden 85,2 Teile Wasser zugefügt und bei 40-45°C 145,3 Teile einer 40 %-igen wäßrigen Glyoxal-Lösung zugegeben. Nach 4 Stunden bei 40-45°C wird auf Raumtemperatur gekühlt und der pH-Wert wird mit 3,7 Teilen einer 30 %-igen, wäßrigen Nariumhydroxidlösung auf 8,1 eingestellt. Das erhaltene Produkt ist eine wäßrige, hellbraune, klare Lösung.

### Beispiel 2

168,6 Teile Dimethylaminopropylamin sowie 60,0 Teile Harnstoff werden auf 115°C erhitzt und, nach einer Stunde bei 115-116°C innerhalb von 3 Stunden auf 157°C erhitzt. Sodann wird auf 90°C gekühlt und nach der Zugabe von 250 Teilen Wasser, bei 60°C, mit der Zugabe von 148,6 Teilen Epichlorhydrin begonnen. Die Epihalohydrinzugabe dauert 6 Stunden, wobei die Temperatur zwischen 60 und 65°C gehalten wird. Anschließend wird noch während 2 Stunden bei 95-100°C ausreagieren gelassen und dann auf 40°C abgekühlt. Sodann werden 270,5 Teile einer 40 %-igen wäßrigen Glyoxallösung zugetropft und vorerst während 4 Stunden bei 40-45°C und anschließend 5 Stunden lang bei 80°C ausreagieren gelassen. Sodann werden noch 43,4 Teile Wasser zugegeben und es wird auf Raumtemperatur gekühlt; der pH-Wert wird nun mit 6,4 Teilen einer 30%-igen, wäßrigen Natriumhydroxidlösung auf 7,0 eingestellt. Das erhaltene Produkt ist eine wäßrige, hellbraune, klare Lösung.

### Beispiel 3

102,1 Teile Dimethylaminopropylamin, 65,5 Teile Dipropylentriamin und 60,0 Teile Harnstoff werden vorgelegt und auf 118°C aufgeheizt. Danach wird innerhalb von 1 Stunde auf 128°C und innerhalb von weiteren 2 Stunden auf 134°C aufgeheizt. Anschließend wird in 3 Stunden auf 150°C erhitzt und während 4 Stunden bei dieser Temperatur ausreagieren gelassen. Nach dem Abkühlen auf 90°C werden 241,5 Teile Wasser zugegeben und die erhaltene klare Lösung wird auf 60°C abgekühlt. Nun werden in 3 Stunden bei 60-65°C 207,9 Teile Epichlorhydrin zugetropft und danach wird auf 95 bis 100°C aufgeheizt und während 2 Stunden bei dieser Temperatur ausreagieren gelassen. Sodann wird auf 40°C gekühlt und, nach der Zugabe von 291,2 Teilen einer 40 %-igen wäßrigen Glyoxallösung, wird während 4 Stunden ausreagieren gelassen. Das erhaltene Produkt ist eine wäßrige, hellbraune, klare Lösung.

### Beispiel 4

Es wird vorgegangen wie im Beispiel 3 beschrieben, aber es werden 76,5 Teile Dimethylaminopropylamin anstelle von 102,1 Teilen, 72,5 Teile Bis(aminopropyl)methylamin anstelle von 65,5 Teilen Dipropylentriamin und 115,6 Teile Epichlorhydrin anstelle von 207,9 Teilen eingesetzt. Das erhaltene Produkt ist eine wäßrige, hellbraune, klare Lösung.

### Beispiel 5

220 Teile einer Mischung aus 72,05 % N,N'-Bis-(dimethylaminopropyl)-harnstoff und 27,95 % N-(Dimethylaminopropyl)-harnstoff werden vorgelegt und nach der Zugabe von 277 Teilen Wasser auf 60°C aufgeheizt. Bei dieser Temperatur werden innerhalb von 4 Stunden 164,5 Teile Epichlorhydrin regelmäßig zugetropft und nach dem Aufheizen auf 95°C, während 2 Stunden bei dieser Temperatur ausreagieren gelassen. Das Reaktionsgemisch wird sodann auf Raumtemperatur abgekühlt. 600 Teile davon werden mit 272 Teilen einer 40 %-igen wäßrigen Glyoxal-Lösung versetzt. Nach der Glyoxal-Zugabe wird auf 40°C erhitzt und, nach 4 Stunden bei 40-45°C, auf 80°C aufgeheizt. Nach 5 Stunden bei 80°C wird auf Raumtemperatur abgekühlt und der pH-Wert durch Zugabe von ca. 5,6 Teilen 30 % iger Natronlauge auf 7,0 eingestellt. Nach der Zugabe von 42,4 Teilen Wasser wird ausgeladen. Das erhaltene Produkt ist eine wäßrige, hellbraune, klare Lösung.

### Beispiel 6

Es wird so vorgegangen wie im Beispiel 5 beschrieben, wobei die Mischung aus 72,05 % N,N'-Bis--(dimethylaminopropyl)-harnstoff und 27,95 % N-(Dimethylaminopropyl)-harnstoff folgendermaßen hergestellt wird: 598 Teile Harnstoff sowie 598 Teile einer Mischung aus 172 Teilen N-(Dimethylaminopropyl)-harnstoff und 426 Teilen N,N'-Bis-(dimethylaminopropyl)-harnstoff werden unter Rühren auf 126°C aufgeheizt. Nun werden mit Anschluß an ein Ammoniakabsorptionssystem, bei 850 mbar Restdruck im Reaktionskolben, innerhalb von 6 Stunden, 1760 Teile N,N-Dimethylaminopropylamin regelmäßig zugetropft, wobei sich Ammoniak bildet und zurückgewonnen wird. Nun wird noch 1 Stunde bei 131°C reagieren gelassen, dann wird innerhalb von 4 Stunden auf 148°C aufgeheizt, und während 20 Minuten bei 148-150°C ausreagieren gelassen. Anschließend wird auf Raumtemperatur abgekühlt. Man erhält ca. 2573 Teile einer Mischung von ca. 1854 Teilen N,N'-Bis-(dimethylaminopropyl)-harnstoff und ca. 717 Teilen N-(Dimethylaminopropyl)-harnstoff.

### Applikationsbeispiele A1 bis A5

Eine mit 1,9 % C.I. Direct Red 89 erzeugte, gut gespülte und getrocknete rote Baumwollfärbung von 1/1 RTT wird in einer Flotte foulardiert, die 60 g/l des jeweiligen gemäß Beispiel 1 bis 5 hergestellten Produktes und 18 g/l Magnesiumchloridhexahydrat enthält, und dann auf eine Trockengewichtzunahme von 80 % abgequetscht und drei Minuten bei 130°C getrocknet. Anschließend wird die Ware während 1 Minute einer Trockenhitzebehandlung bei 170°C unterworfen. Man erhält eine rote Färbung mit sehr hohen Naßechtheiten, insbesondere Waschechtheiten.

### Applikationsbeispiele B1-B5 bis K1-K5

Man verfährt wie in den Applikationsbeispielen A1 bis A5 beschrieben, mit dem Unterschied, daß anstelle von C.I. Direct Red 89 die in der folgenden Tabelle aufgezählten Farbstoffe in den angegebenen Konzentrationen zur Erreichung der jeweiligen Färbungsintensität eingesetzt werden. Es werden Färbungen mit sehr hohen Naßechtheiten, insbesondere Waschechtheiten, erhalten.

**Tabelle**

| Applikationsbeispiel | Farbstoff | Konzentration | RTT |
|---|---|---|---|
| B1-B5 | C.I. Direct Yellow 152 | 0,95 % | 1/1 |
| C1-C5 | C.I. Direct Yellow 162 | 1,35 % | 1/1 |
| D1-D5 | C.I. Direct Orange 39 | 1,4 % | 1/1 |
| E1-E5 | C.I. Direct Red 227 | 2,7 % | 1/1 |
| F1-F5 | C.I. Direct Blue 71 | 1 % | 1/1 |
| G1-G5 | C.I. Direct Blue 85 | 1,3 % | 1/1 |
| H1-H5 | C.I. Direct Red 224 | 2,15 % | 1/1 |
| I1-I5 | C.I. Direct Blue 199 | 0,8 % | 1/3 |
| J1-J5 | Optisal Rot R SGR* | 1,4 % | 1/1 |
| K1-K5 | Optisal Royalblau 3RL SGR* | 2,65 % | 1/1 |

| | | | |
|---|---|---|---|
| * Farbstoffe der Fa. CLARIANT (Schweiz) AG (Muttenz, Schweiz) | | | |

### Applikationsbeispiele L1 bis L5

Eine mit 6 % C.I. Reactive Blue 79 erzeugte, gespülte, gewaschene und getrocknete marineblaue Baumwollfärbung wird in einer Flotte foulardiert, die 40 g/l des jeweiligen Produktes von Beispiel 1 bis 5 und 12 g/l Magnesiumchloridhexahydrat enthält, dann auf eine Trockengewichtszunahme von 80 % abgequetscht und 3 Minuten bei 130°C getrocknet. Anschließend wird die Ware bei 170°C während 1 Minute kondensiert. Man erhält eine marineblaue Färbung mit sehr hohem Naßechtheitsniveau.

### Applikationsbeispiele M1 bis M5

Eine gespülte und oxydierte Baumwollfärbung aus 5 % C.I. Leuco Sulphur Black 1 (eingesetzt in Form einer 25 %-igen wäßrigen Zubereitung), wird unter den in den Applikationsbeispielen L1 bis L5 angegebenen Bedingungen nachbehandelt. Man erhält eine Schwarzfärbung mit einem sehr hohen Waschechtheitsniveau.

### Applikationsbeispiele N1 bis N5

Eine auf Polyester/Baumwolle (65/35) mit 0,37 % C.I. Direct Red 89, 0,12 % C.I. Disperse Yellow 235 und 0,26 % C.I. Disperse Red 371 (einbadig bei 130°C gefärbt, gespült und getrocknet) erzeugte Färbung wird in einer Flotte enthaltend 20 g/l des jeweiligen Produktes von Beispiel 1 bis 5 und 6 g/l MgCl₂·6H₂O foulardiert und unter den im Applikationsbeispiel L1 beschriebenen Bedingungen kondensiert. Man erhält eine rote Färbung mit sehr guten Naßechtheiten.

## Patentansprüche

1. Polymere, wasserlösliche, quaternäre Ammoniumverbindungen (F) erhältlich durch Quaternierung von
(a) mindestens einer aminogruppenhaltigen Harnstoffverbindung, die eine oder mehrere Gruppen der Formel
-NH-CO-NH-G-L- (α)
enthält, worin
G eine Verbrückungsgruppe
und
L eine tertiäre, quaternierbare Aminogruppe
bedeuten,
mit
(b)
(b₁) einem Epihalohydrin
und gegebenenfalls
(b₂) mindestens einem weiteren Quaternierungsmittel
zu einem quaternierten Produkt (q)
und Umsetzung des quaternierten Produktes (q) mit
(c) einem Dialdehyd der Formel 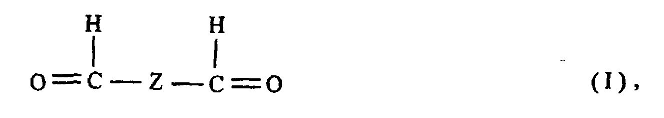
worin Z Methylen oder die direkte Bindung bedeutet,
oder einem Harnstoffderivat davon.

2. Quaternäre Ammoniumverbindungen (F) gemäß Anspruch 1, **dadurch gekennzeichnet, daß**
(a) eine Harnstoffverbindung ist, die mindestens eine tertiäre, quaternierbare Aminogruppe enthält und durch Kondensation von Harnstoff mit
(a₁) mindestens einem Polyamin, das mindestens eine primäre Aminogruppe und mindestens eine sekundäre oder tertiäre Aminogruppe enthält, und/oder mindestens einem Aminoamid, das mindestens eine unsubstituierte Carbamoylgruppe und mindestens eine sekundäre oder tertiäre Aminogruppe enthält,
und gegebenenfalls Umsetzung mit
(a₂) mindestens einem weiteren aliphatischen Reagens, das zur alkylierenden oder acylierenden Reaktion mit Harnstoff und/oder mit dem Umsetzunsprodukt von Harnstoff mit (a₁) unter Bildung einer acylierten oder tertiären Aminogruppe fähig ist,
erhältlich ist

3. Quaternäre Ammoniumverbindung (F) gemäß Anspruch 1 oder 2, in Form von wäßrigem Präparat mit einem (F)-Gehalt im Bereich von 10 bis 80 Gew.-%.

4. Präparate gemäß Anspruch 3 die in Form einer wäßrigen 25 %-igen Lösung eine Rotationsviskosität <1000 mPa·s bei 20°C aufweisen

5. Präparate gemäß Anspruch 3 oder 4 mit einem pH im Bereich von 2 bis 8,5.

6. Verwendung der polymeren, quaternären Ammoniumverbindungen (F) gemäß Anspruch 1 oder 2, gegebenenfalls in Form von Präparat gemäß einem der Ansprüche 3 bis 5, als Fixierhilfsmittel für Färbungen von hydrophilem Fasermaterial.

7. Verwendung von (F) gemäß Anspruch 6 als Fixierhilfsmittel für Färbungen auf Cellulose mit Direkt-, Reaktiv- oder Schwefelfarbstoffen.

8. Verwendung gemäß Anspruch 6 oder 7, **dadurch gekennzeichnet, daß** man Textilfärbungen in Continue-Verfahren mit (F) nachbehandelt.

9. Verwendung nach einem der Ansprüche 6 bis 8 unter neutralen bis sauren Bedingungen in Gegenwart eines Katalysators (K).

10. Verwendung nach Anspruch 9, **dadurch gekennzeichnet, daß** (K) Magnesiumchlorid oder -sulfat ist.

## Claims

1. Polymeric, water-soluble, quaternary ammonium compounds (F) obtainable by quaternization of
(a) at least one amino-group-containing urea compound that contains one or more groups of the formula
-NH-CO-NH-G-L- (α)
in which
G signifies a bridging group, and
L signifies a tertiary, quaternizable amino group
with
(b)
(b₁) an epihalohydrin, and optionally
(b₂) at least one further quaternizing agent
to a quaternized product (q)
and reaction of the quaternized product (q) with
(c) a dialdehyde of formula 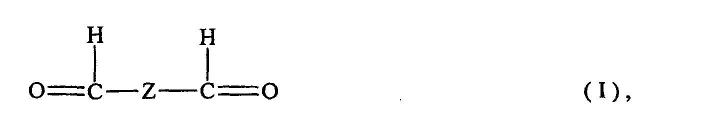
in which Z signifies methylene or the direct bond,
or a urea derivative thereof.

2. Quaternary ammonium compounds (F) according to Claim 1 **characterized in that**
(a) is a urea compound containing at least one tertiary, quternizable amino group and which is obtainable by condensation of urea with
(a₁) at least one polyamine that contains at least one primary amino group and at least one secondary or tertiary amino group and/or at least one aminoamide that contains at least one unsubstituted carbamoyl group and at least one secondary or tertiary amino group,
and optionally reaction with
(a₂) at least one further aliphatic reagent which is capable of an alkylating or acylating reaction with urea and/or with the reaction product of urea with (a₁) with formation of an acylated or tertiary amino group.

3. Quaternary ammonium compound (F) according to Claim 1 or 2 in the form of an aqueous composition with an (F)-content in the range of 10 to 80 % by weight.

4. Compositions according to Claim 3 which in form of an aqueous 25 % solution display a rotational viscosity < 1000 mPa·s at 20°C.

5. Compositions according to Claim 3 or 4 with a pH in the range of 2 to 8.5.

6. Use of polymeric, quaternary ammonium compounds (F) according to Claim 1 or 2, optionally in the form of a composition according to any one of Claims 3 to 5, as a fixing adjuvant for dyeings of hydrophilic fibrous material.

7. Use of (F) according to Claim 6 as fixing adjuvant for dyeings on cellulose with direct, reactive or sulphur dyes.

8. Use according to Claim 6 or 7 **characterised in that** textile dyeings are aftertreated with (F) in continuous processes.

9. Use according to any one of Claims 6 to 8 under neutral to acidic conditions in the presence of a catalyst (K).

10. Use according to Claim 9 **characterised in that** (K) is magnesium-chloride or sulphate.

## Revendications

1. Composés d'ammoniums quaternaires polymères solubles dans l'eau (F) qui peuvent être obtenus par quaternisation de
(a) au moins un composé de l'urée contenant des groupes amino, qui contient un ou plusieurs groupes de formule
-NH-CO-NH-G-L- (α)
dans laquelle
G signifie un groupe formant un pont et
L signifie un groupe amino tertiaire quaternisable,
avec
(b)
(b₁) une épihalohydrine, et éventuellement
(b₂) au moins un autre agent de quaternisation
pour donner un produit quaternisé (q),
et réaction du produit quaternisé (q) avec
(c) un dialdéhyde de formule 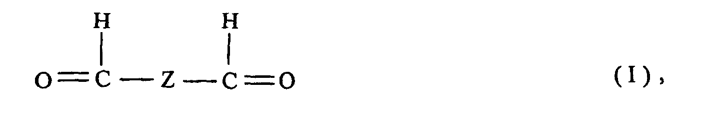
dans laquelle Z signifie un groupe méthylène ou une liaison directe,
ou un dérivé de l'urée de ce composé.

2. Composés d'ammoniums quaternaires (F) selon la revendication 1, **caractérisé en ce que**
(a) est un composé de l'urée qui contient au moins un groupe amino tertiaire quaternisable et qui peut être obtenu par condensation de l'urée avec
(a₁) au moins une polyamine, qui contient au moins un groupe amino primaire et au moins un groupe amino secondaire ou tertiaire, et/ou au moins un amino-amide, qui contient au moins un groupe carbamoyle non substitué et au moins un groupe amino secondaire ou tertiaire,
et éventuellement réaction avec
(a₂) au moins un autre réactif aliphatique, qui est capable de réaction d'alkylation ou d'acylation avec l'urée et/ou avec le produit de réaction de l'urée avec (a₁) avec formation d'un groupe amino acylé ou tertiaire.

3. Composé d'ammonium quaternaire (F) selon la revendication 1 ou 2, sous forme de préparation aqueuse avec une teneur en (F) comprise dans un intervalle de 10 à 80 % en poids.

4. Préparations selon la revendication 3 qui, sous la forme d'une solution aqueuse à 25 %, présentent une viscosité de rotation < 1000 mPa.s à 20°C.

5. Préparations selon la revendication 3 ou 4 ayant un pH dans un domaine de 2 à 8,5.

6. Utilisation des composés d'ammoniums quaternaires polymères (F) selon la revendication 1 ou 2, éventuellement sous la forme de préparation selon l'une des revendications 3 à 5, comme agents de fixation pour la teinture de matières fibreuses hydrophiles.

7. Utilisation de (F) selon la revendication 6, comme agents de fixation pour les teintures sur la cellulose avec des colorants directs, réactifs ou au soufre.

8. Utilisation selon la revendication 6 ou 7, **caractérisée en ce qu'**on soumet les teintures sur textiles à un post-traitement avec (F) dans un procédé en continu.

9. Utilisation selon l'une des revendications 6 à 8 sous des conditions neutres à acides en présence d'un catalyseur (K).

10. Utilisation selon la revendication 9, **caractérisée en ce que** (K) est le chlorure ou le sulfate de magnésium.
